# EUROPEAN PATENT APPLICATION

(11) **EP 4 818 281 A1**
(43) Date of publication of application: **07.10.2026**
(21) Application number: 24897569.0
(22) Date of filing: 27.11.2024
(51) Int. Cl.: C09D 183/04, C09D 5/18, C09D 7/61, C09D 7/63

(54) **COATING COMPOSITION AND COATED ARTICLE**

(30) Priority: 29.11.2023 JP 2023202062
(71) Applicant: SHIN-ETSU CHEMICAL CO., LTD., Tokyo 100-0005 (JP)
(72) Inventor: YOSHII, Ryosuke, Annaka-shi, Gunma 379-0224 (JP); MORIMOTO, Yukio, Tokyo 100-0005 (JP); HIGUCHI, Koichi, Annaka-shi, Gunma 379-0224 (JP); WAKAYAMA, Yoshihide, Tokyo 163-0606 (JP); UMEMORI, Hiroshi, Tokyo 163-0606 (JP); SAKURADA, Masashi, Otawara-shi, Tochigi 324-8516 (JP); OBATA, Yusuke, Otawara-shi, Tochigi 324-8516 (JP)
(74) Representative: Mewburn Ellis LLP
(86) International application number: PCT/JP2024/041913
(87) International publication number: WO 2025/115885

(57) **Abstract**

Provided is a coating composition including (i) an organopolysiloxane composed of the ratio of units represented in formula (1):

(R1³_{S}iO1_{/2)}a₍R2²_{S}iO)b₍R3¹_{S}iO3_{/2)}c₍SiO2₎d₍OR4⁾e (1)

(where R¹-R³ represent alkyl groups or the like that may be substituted with a hydrogen atom, one or more hydroxy groups, or the like, and that may have an ether bond, with at least a portion of the same being an alkyl group or the like that is substituted with a hydroxy group and that may have an ether bond, R⁴ represents a hydrogen atom or an alkyl group, and a is 0-0.5, b is 0-0.5, c is 0.2-1.0, d is 0-0.5, e is 0-3.0, and a+b+c+d=1 is satisfied), and (ii) an inorganic filler.

## Description

### TECHNICAL FIELD

The present invention relates to a coating composition and a coated article, and more specifically, to a flame-retardant coating composition and a coated article for use on a wood-based material.

### BACKGROUND ART

In recent years, the use of wood in buildings has been promoted from the viewpoints of carbon sequestration and effective use of domestic resources. However, wood is a flammable base material, and thus the use of wood in applications requiring flame-retardant performance is severely limited.

Under such circumstances, various technologies for imparting flame retardancy to wood have been examined.

For example, Patent Document 1 describes that the flame retardancy is successfully imparted to wood by impregnating the wood with a high concentration of a flame retardant, such as boric acid. However, this system has a disadvantage that the flame retardant adsorbed into wood leaches out or deliquesces due to moisture in the air, and thus significantly impairs the aesthetic appearance.

Patent Document 2 reports that the leaching of agents can be suppressed by impregnating wood with a boron compound and coating the surface of wood with a siloxane compound. However, it has been reported that when this method is used, the boron compound dissolves in the moisture inherently contained in the wood, which causes efflorescence at the interface between the coating film and the wood. In addition, this method requires multiple steps including impregnation of the flame retardant, drying, and surface coating, and thus an increase in production cost is inevitable.

Patent Document 3 reports a technology of imparting the flame retardancy to wood without impregnating wood with a flame retardant by coating the surface of wood with a primer component mainly composed of silica and coating the surface with water glass. Meanwhile, water glass is known to have disadvantages such as poor curing properties, low water resistance, and discoloration resulting from reaction with word. For this reason, there are many challenges to practical application of water glass.

Further, during the coating of the surface of wood with a coating liquid, some of the coating liquid is absorbed into the wood, causing powder additives such as pigments or fillers to segregate on the surface, which may result in appearance defects such as efflorescence or discoloration. Such appearance defects are likely to occur particularly around knots where wood fibers are sparse. An intermediate coating layer called a sealer is usually provided to suppress the absorption of a coating material into wood, but such a sealer typically contains an organic polymer to improve the film-forming properties and thus degrades the flame retardancy of the wood.

### PRIOR ART DOCUMENTS

### PATENT DOCUMENTS

Patent Document 1: JP 3538194
Patent Document 2: JP 4367640
Patent Document 3: JP-A 2018-115294

### SUMMARY OF INVENTION

### TECHNICAL PROBLEM

The present invention has been made in consideration of the above-described circumstances, and an object thereof is to provide a coating composition capable of maintaining the appearance of wood, such as the wood grain, and imparting excellent flame retardancy and moisture resistance, and a coated article using the same.

### SOLUTION TO PROBLEM

As a result of intensive examination conducted by the present inventors in order to achieve the above-described object, it has been found that the above-described object can be achieved by using a coating composition containing a predetermined hydroxy group-modified organopolysiloxane and a predetermined inorganic filler, thereby completing the present invention.

That is, the present invention provides the following aspects.
1. A coating composition including: (
   i) 100 parts by weight of an organopolysiloxane comprising structural units in a ratio represented by the following formula (1)

      (R1³_{S}iO1_{/2)}a₍R2²_{S}iO)b₍R3¹_{S}iO3_{/2)}c₍SiO2₎d₍OR4⁾e (1)

      in the formula, R¹, R², and R³ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups and may contain an ether bond, where at least some of R¹, R², and R³ are a C₁-C₂₀ alkyl group which may be substituted with hydroxy groups and may contain an ether bond, a C₆-C₂₀ aryl group which may be substituted with hydroxy groups and may contain an ether bond, or a C₇-C₂₀ aralkyl group which may be substituted with hydroxy groups and may contain an ether bond, and R⁴ is each independently a hydrogen atom or a C₁-C₈ alkyl group, a is 0 to 0.5, b is 0 to 0.5, c is 0.2 to 1.0, d is 0 to 0.5, e is 0 to 3.0, and a + b + c + d is 1, and
   (ii) 100 to 900 parts by weight of an inorganic filler.
2. The coating composition according to 1, in which a total number of hydroxy groups contained in R¹, R², and R³ is 50 mol% or more with respect to a total number of silicon atoms in the formula (1).
3. The coating composition according to 1 or 2, in which the inorganic filler (ii) contains one or more types selected from among silica, alumina, and a phyllosilicate.
4. The coating composition according to any one of 1 to 3, further including: 10 to 300 parts by weight of one or more types of flame retardants (iii) selected from among a phosphorus-based compound, a boron-based compound, a magnesium-based compound, an aluminum-based compound, a nitrogen-based compound, an antimony-based compound, and a halogen-based compound with respect to 100 parts by weight of the component (i).
5. The coating composition according to 4, in which a weight ratio [(ii)+(iii)]/(i) of a total weight of the component (ii) and the component (iii) to a weight of the component (i) is 2.0 to 9.0.
6. A cured product of the coating composition according to any one of 1 to 5.
7. A coated article including a coating layer composed of a coating film formed from the coating composition according to any one of 1 to 5, provided on at least a portion of a surface of a wood-based material directly or via one or more types of other layers.
8. A coated article including:
   a topcoat layer composed of a coating film formed from a topcoat coating composition containing the following component (A), component (B), and component (C), provided on at least a portion of a surface of a wood-based material via an undercoat layer composed of a coating film formed from the coating composition according to any one of 1 to 5,
   (A) 100 parts by weight of an organopolysiloxane comprising structural units in a ratio represented by the following formula (2)

      (R5³_{S}iO1_{/2)}f₍R6²_{S}iO)g₍R7¹_{S}iO3_{/2)}h₍SiO2₎i₍OR8⁾j (2)

      in the formula, R⁵, R⁶, and R⁷ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups, where at least some of R⁵, R⁶, and R⁷ are a C₁-C₂₀ alkyl group substituted with amino groups, a C₆-C₂₀ aryl group substituted with amino groups, or a C₇-C₂₀ aralkyl group substituted with amino groups, and R⁸ is each independently a hydrogen atom or a C₁-C₈ alkyl group, f is 0 to 0.5, g is 0 to 0.5, h is 0.2 to 1.0, i is 0 to 0.5, j is 0 to 3.0, and f + g + h + i is 1,
   (B) 50 to 300 parts by weight of one or more types of flame retardants selected from among a phosphorus-based compound, a boron-based compound, a magnesium-based compound, an aluminum-based compound, a nitrogen-based compound, an antimony-based compound, and a halogen-based compound; and
   (C) 25 to 150 parts by weight of an inorganic filler.
9. The coated article according to 8, in which a coating amount of the undercoat layer is 0.01 to 0.50 kg/m² with respect to the wood-based material, and a coating amount of the topcoat layer is 0.1 to 2.0 kg/m² with respect to the wood-based material.

### ADVANTAGEOUS EFFECTS OF INVENTION

According to the present invention, when the coating composition is used as an undercoat coating material of a wood-based material, the organopolysiloxane and the inorganic filler effectively cover the gaps between wood fibers, which improves the moisture resistance and suppresses the absorption of a topcoat coating material into the surface of the wood-based material. Therefore, it is possible to suppress occurrence of appearance defects such as whitening around knots.

Further, when the coating composition is used in combination with a topcoat layer containing an organopolysiloxane, a flame retardant, and an inorganic filler, the coating film undergoes ceramization upon combustion to form a fire-resistant layer and/or a heat insulating layer, and thus it is possible to prevent the combustion of the wood-based material.

Due to these effects, the present invention can provide a coated article that maintains the appearance of a wood-based material, such as the wood grain, which has been considered difficult to achieve in the related art, and that exhibits excellent flame retardancy and moisture resistance.

The coating composition of the present invention can impart the flame retardancy to a wood-based material by being applied to the surface of the wood-based material, and can impart the flame retardancy to a wood-based material more easily and simply than by a method of impregnating a wood-based material with a flame retardant in the related art. In addition, a wood-based material can also be made flame-retardant through on-site application, and thus the degree of freedom in design and/or construction of wooden buildings can be expected to greatly expand.

### DESCRIPTION OF EMBODIMENTS

Hereinafter, the present disclosure will be described in detail.
[1] Coating composition A coating composition of the present invention contains the following component (i) and component (ii):
   (i) an organopolysiloxane composed of units at ratios represented by the following formula (1)
   (ii) an inorganic filler.

### (i) Organopolysiloxane

The component (i) is an organopolysiloxane containing structural units in a ratio represented by the following formula (1). Notably, in the formula (1), the unit represented by (R¹₃SiO_{1/2}) is referred to as an M unit, the unit represented by (R²₂SiO) is referred to as a D unit, the unit represented by (R³SiO_{3/2}) is referred to as a T unit, and the unit represented by (SiO₂) is referred to as a Q unit, unless otherwise specified.

(R1³_{S}iO1_{/2)}a₍R2²_{S}iO)b₍R3¹_{S}iO3_{/2)}c₍SiO2₎d₍OR4⁾e (1)

In the formula (1), R¹, R², and R³ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups and may contain an ether bond, where at least some of R¹, R², and R³ are a C₁-C₂₀ alkyl group which may be substituted with hydroxy groups and may contain an ether bond, a C₆-C₂₀ aryl group which may be substituted with hydroxy groups and may contain an ether bond, or a C₇-C₂₀ aralkyl group which may be substituted with hydroxy groups and may contain an ether bond.

The C₁-C₂₀ alkyl group may be linear, branched, or cyclic, and specific examples thereof include a methyl group, an ethyl group, an n-propyl group, an isopropyl group, an n-butyl group, an isobutyl group, a sec-butyl group, a tert-butyl group, an n-pentyl group, an n-hexyl group, an n-octyl group, an n-decyl group, a cyclopentyl group, and a cyclohexyl group. Among these, from the viewpoint of enhancing the flame retardancy of the coating composition, a methyl group or an ethyl group is preferable.

Examples of the C₆-C₂₀ aryl group include a phenyl group and a naphthyl group. Examples of the C₇-C₂₀ aralkyl group include a benzyl group and a phenethyl group. Examples of the heterocyclic group include a piperidinyl group, a pyridinyl group, a pyrrolyl group, and a thienyl group.

In the formula (1), at least some of R¹, R², and R³ are a C₁-C₂₀ alkyl group which has been substituted with hydroxy groups and may contain an ether bond, a C₆-C₂₀ aryl group which has been substituted with hydroxy groups and may contain an ether bond, or a C₇-C₂₀ aralkyl group which has been substituted with hydroxy groups and may contain an ether bond, as described above. As such groups substituted with hydroxy groups, a 2-hydroxyethyl group, a 3-hydroxypropyl group, a 2,3-dihydroxypropyl group, a 3,4-dihydroxybutyl group, a β-(3,4-dihydroxycyclohexyl)ethyl group, a group represented by the following formula (3), and the like are preferable. 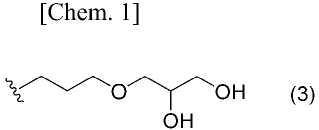 (In the formula, the wavy line represents a bonding site.)

From the viewpoints of the solubility of the component (i) in water and the affinity of the component (i) for the inorganic filler component and the base material, the total number of hydroxy groups contained in R¹, R², and R³ is preferably 50 mol% or more, more preferably 80 mol% or more, and still more preferably 100 mol% or more with respect to the total number of silicon atoms in the formula (1).

Further, among the groups represented by R¹, R², and R³, substituents other than the groups substituted with hydroxy groups are preferably a methyl group or an ethyl group with a small number of carbon atoms in the flammable alkyl chain and more preferably a methyl group.

In the formula (1), R⁴ is each independently a hydrogen atom or a C₁-C₈ alkyl group.

Specific examples of the C₁-C₈ alkyl group include a methyl group, an ethyl group, an n-propyl group, an isopropyl group, an n-butyl group, an isobutyl group, a sec-butyl group, a tert-butyl group, an n-pentyl group, an n-hexyl group, and an n-octyl group.

Among these, from the viewpoint of the flame retardancy of the coating composition, R⁴ is preferably a hydrogen atom.

The subscript "a" is 0 to 0.5, the subscript "b" is 0 to 0.5, the subscript "c" is 0.2 to 1.0, the subscript "d" is 0 to 0.5, and a + b + c + d is 1.

The subscript "e" is a number of 0 to 3.0 and preferably a number of 0.1 to 2.0 from the viewpoint of the water solubility of the organopolysiloxane. When "e" is more than 3.0, the film-forming properties of the coating composition and the moisture resistance of the coating film may be deteriorated.

The organopolysiloxane of the component (i) has advantages in that network formation is facilitated and the component is likely to be immobilized onto the base material due to a certain degree of condensation that has been promoted and that the flame retardancy is less likely to be degraded because the organopolysiloxane contains fewer alkoxy groups serving as the sources of combustible gas than in a monomer (silane coupling agent or the like) component containing no siloxane bond (Si-O-Si bond).

The content of the monomer component containing no siloxane bond is preferably 50% by weight or less, more preferably 30% by weight or less, still more preferably 10% by weight or less, and even still more preferably 1% by weight or less with respect to the amount of the organopolysiloxane of the component (i).

The ratio between the monomer component containing no siloxane bond and the organopolysiloxane component can be determined from the signals and integration ratios in a ²⁹Si-NMR (nuclear magnetic resonance) spectrum. In the ²⁹Si-NMR, for example, in a case of a trifunctional siloxane (T unit), the number of silicon atoms forming siloxane bonds can be determined by examining the proportions of (T0) to (T3) described below. Since the detection magnetic fields are usually in order of T3 > T2 > T1 > T0 in terms of high magnetic field, the T0 component is a silicon atom derived from a silane coupling agent and the others are silicon atoms derived from siloxanes, and accordingly, the proportions of the monomer (silane coupling agent) component and the organopolysiloxane component can be determined from the ratio of the integral values of respective peaks. 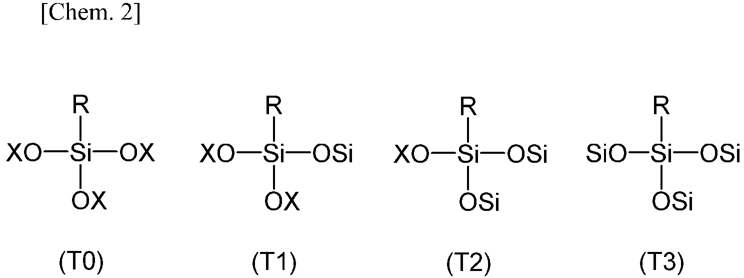 (In the formulae, R is an organic group, and X is a hydrogen atom or an organic group.)

The organopolysiloxane of the component (i) can be produced by hydrolytic condensation of monomer components of each constitutional unit in the presence of an acid or base catalyst. Further, an organopolysiloxane containing an alkyl group, aryl group, aralkyl group, and the like substituted with a hydroxy group can be produced by carrying out a deprotection reaction of a protected hydroxy group as necessary.

Examples of monomers for the Q unit include tetramethoxysilane, tetraethoxysilane, tetra(n-propoxy)silane, tetra(i-propoxy)silane, tetra(n-butoxy)silane, alkali silicate, and active silicic acid obtained by cation exchange of alkali silicate.

Examples of monomers for the T unit include methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)-3-aminopropyltrimethoxysilane, N-(2-aminoethyl)-3-aminopropyltriethoxysilane, γ-isocyanatopropyltrimethoxysilane, and γ-isocyanatopropyltriethoxysilane.

Among these, γ-methacryloxypropyltrimethoxysilane, γ-methacryloxypropyltriethoxysilane, γ-acryloxypropyltrimethoxysilane, or the like can be converted into a hydroxy group-substituted form through transesterification with water, γ-glycidoxypropyltrimethoxysilane, γ-glycidoxypropyltriethoxysilane, β-(3,4-epoxycyclohexyl)ethyltrimethoxysilane, or the like can be converted into a diol form by reacting an epoxy ring with water, and thus such conversions are suitable from the viewpoint that the solubility of the siloxane in water, the affinity for wood and the inorganic filler component, and the like are enhanced.

Examples of monomers for the D unit include dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)-3-aminopropylmethyldimethoxysilane.

Among these, from the viewpoints of the solubility of the siloxane to be obtained in water and the affinity for wood and the flame retardant component, γ-methacryloxypropylmethyldimethoxysilane, γ-methacryloxypropylmethyldiethoxysilane, or the like can be converted into a hydroxy group-substituted form through transesterification with water, γ-glycidoxypropylmethyldimethoxysilane, γ-glycidoxypropylmethyldiethoxysilane, β-(3,4-epoxycyclohexyl)ethylmethyldimethoxysilane, or the like can be converted into a diol form by reacting the epoxy ring with water, and thus such conversions are suitable because the solubility of the siloxane in water, the affinity for wood and the inorganic filler component, and the like are enhanced.

Examples of monomers for the M unit include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, n-decyldimethylethoxysilane, trimethylsilanol, triethylsilanol, n-propyldimethylsilanol, n-propyldiethylsilanol, isopropyldimethylsilanol, isopropyldiethylsilanol, propyldimethylsilanol, n-butyldimethylsilanol, n-hexyldimethylsilanol, n-pentyldimethylsilanol, n-decyldimethylsilanol, γ-aminopropyldimethylmethoxysilane, and N-(2-aminoethyl)-3-aminopropyldimethylmethoxysilane.

Among these, from the viewpoints of the solubility of the organopolysiloxane to be obtained in water and the affinity for the base material and the flame retardant component, γ-methacryloxypropyldimethylmethoxysilane, γ-methacryloxypropyldimethylethoxysilane, or the like can be converted into a hydroxy group-substituted form through transesterification with water, γ-glycidoxypropyldimethylmethoxysilane, γ-glycidoxypropyldimethylethoxysilane, β-(3,4-epoxycyclohexyl)ethyldimethylmethoxysilane, or the like can be converted into a diol form by reacting the epoxy ring with water, and thus such conversions are suitable because the solubility of the siloxane in water, the affinity for wood and the inorganic filler component, and the like are enhanced.

Since the M unit and the D unit have two or more Si-C bonds and are highly flammable, the contents of the M unit and the D unit are 50 mol% or less, respectively, with respect to all the constitutional units in the organopolysiloxane of the component (i).

That is, in the formula (1), "a" is a number of 0 to 0.5, preferably a number of 0 to 0.2, and more preferably 0 to 0.1.

Further, "b" is a number of 0 to 0.5, preferably a number of 0 to 0.2, and more preferably 0 to 0.1.

Since the T unit has one Si-C bond and exhibits lower flammability than the D unit and the M unit, the flame retardancy is enhanced by setting the content of the T unit to 20 mol% or more with respect to all the constitutional units in the organopolysiloxane of the component (i).

That is, in the formula (1), "c" is a number of 0.2 to 1.0, preferably a number of 0.5 to 1.0, and more preferably a number of 0.6 to 1.0.

The Q unit has no Si-C bonds and exhibits low flammability, and thus provides an effect of suppressing a decrease in flame retardancy due to combustion derived from Si-C bonds. Meanwhile, since the Q unit has a large number of cross-linking points and high reactivity, the content of the Q unit is in a range of 0 mol% to 50 mol% with respect to all the constitutional units in the organopolysiloxane of the component (i), that is, "d" is a number of 0 to 0.5 and preferably a number of 0 to 0.4 from the viewpoints of the compatibility with the flame retardant component and the film-forming properties.

The ratio of each constitutional unit in the component (i) can be confirmed, for example, by a known method using chemical shifts and the ratio of integral values of ²⁹Si-NMR signals.

The content of the component (i) is preferably 5 to 50% by weight and more preferably 10 to 30% by weight with respect to the total solid content in the coating composition. When the content of the component (i) is 5% by weight or more, the film-forming properties and the transparency of the coating film are enhanced. Further, when the content thereof is 50% by weight or less, the flame retardancy of the coating film and the effect of suppressing appearance defects around knots of the wood-based material are enhanced.

The component (i) may be used alone or in combination of two or more types thereof.

### (ii) Inorganic filler

As the inorganic filler of the component (ii), commonly known inorganic fillers can be used, and examples thereof include inorganic fillers containing Group 13 elements, Group 14 elements (excluding carbon), first-series transition elements, second-series transition elements, third-series transition elements, lanthanoids, and the like.

Examples of the inorganic fillers containing Group 13 elements include oxides derived from aluminum, boron, indium, and the like. Among these, alumina is preferable.

Examples of the inorganic fillers containing Group 14 elements (excluding carbon) include oxides derived from silicon, tin, and the like, and salts thereof. Among these, silica is preferable.

Examples of the inorganic fillers containing first-series transition elements include oxides derived from titanium, manganese, zinc, and the like, and these oxides can also be used as light-absorbing materials for specific wavelengths.

Examples of the inorganic fillers containing second-series transition elements include oxides derived from yttrium, zirconium, and the like, and these oxides can also be used as light-absorbing and fluorescent materials for specific wavelengths.

Examples of the inorganic fillers containing third-series transition elements include oxides derived from hafnium, tantalum, and the like.

Examples of the inorganic fillers containing lanthanoid include oxides derived from lanthanum, cerium, praseodymium, neodymium, terbium, dysprosium, ytterbium, and the like, and these oxides can also be used as light absorbing and fluorescent materials for specific wavelengths.

Further, composites formed by combining two or more of these via chemical bonds can be used.

The shape of the inorganic filler is not particularly limited, and inorganic fillers in various shapes such as a spherical shape, a hollow spherical shape, a porous shape, a plate shape, a needle shape, and a fibrous shape can be used.

In particular, the inorganic filler used in the present invention is preferably an inorganic oxide or silicate containing elements such as silicon, boron, and aluminum, which undergoes ceramization upon combustion to form a fire-resistant layer or a heat insulating layer, and examples thereof include silica, alumina, and a phyllosilicate. From the viewpoint of further enhancing the flame retardancy and the effect of suppressing appearance defects around knots, a combination of a silicon oxide-containing filler such as silica and a phyllosilicate such as clay is particularly preferable.

In particular, the inorganic filler used in the present invention is preferably silica particles having an average particle diameter of 15 to 100 nm and more preferably silica particles having an average particle diameter of 20 to 80 nm calculated based on the BET specific surface area. The film-forming properties of the coating film are excellent when the average particle diameter thereof is 15 nm or more, and the transparency of the coating film is excellent when the average particle diameter thereof is 100 nm or less.

The amount of the component (ii) to be blended is 100 to 900 parts by weight and more preferably 200 to 800 parts by weight with respect to 100 parts by weight of the organopolysiloxane of the component (i). When the amount thereof is 100 parts by weight or more, the flame retardancy of the coating film is enhanced, and absorption of the topcoat coating material and the occurrence of appearance defects around knots can be suppressed because an undercoat layer is formed such that the inorganic filler fills the wood grain on the surface of the wood-based material, for example, in a case where the coating composition of the present invention is used as the undercoat layer of the wood-based material, and a topcoat layer is further formed thereon. Further, when the amount thereof is 900 parts by weight or less, the film-forming properties of the coating film are enhanced, and the transparency of a coated article and the effect of suppressing the appearance defects around knots are enhanced. Further, the component (ii) may be used alone or in combination of two or more types thereof.

### (iii) Flame retardant

The coating composition of the present invention may contain, as the component (iii), one or more types of flame retardants selected from among a phosphorus-based compound, a boron-based compound, a magnesium-based compound, an aluminum-based compound, a nitrogen-based compound, an antimony-based compound, and a halogen-based compound.

Examples of the phosphorus-based compound include organophosphorus compounds, phosphoric acid, phosphoric acid esters, and phosphates, and specific examples thereof include diammonium hydrogen phosphate, ammonium dihydrogen phosphate, diguanidine phosphate, ammonium polyphosphate, hydrophobized ammonium polyphosphate, guanylurea phosphate, carbamate polyphosphate, and melamine phosphate.

Examples of the boron-based compound include organoboron compounds, boric acid, borax, boron oxide, boric acid esters, and borates.

Examples of the magnesium-based compound include magnesium hydroxide and magnesium oxide.

Examples of the aluminum-based compound include aluminum hydroxide.

Examples of the nitrogen-based compound include ammonium sulfate, ammonium carbonate, ammonium hydrogen carbonate, and melamine cyanurate.

Example of the antimony-based compound include antimony trioxide.

Examples of the halogen-based compound include zinc chloride.

Among these, from the viewpoint of enhancing the transparency and flame retardancy of a coated article, and the effect of suppressing appearance defects around knots of wood, the flame retardant used in the coating composition of the present invention is preferably a phosphorus-based compound or a boron-based compound.

Specific examples thereof that can be suitably used include diammonium hydrogen phosphate, ammonium dihydrogen phosphate, ammonium polyphosphate, boric acid, borax, and boron oxide.

When the component (iii) is used, the amount thereof to be blended is preferably 10 to 300 parts by weight and more preferably 50 to 200 parts by weight with respect to 100 parts by weight of the organopolysiloxane of the component (i) from the viewpoints of the flame retardancy, the film-forming properties, the transparency, and the moisture resistance of the coating film.

The component (iii) may be used alone or in combination of two or more types thereof.

A weight ratio [(ii)+(iii)]/(i) of the total weight of the component (ii) and the component (iii) to the weight of the component (i) in the coating composition of the present invention is preferably 1.0 to 10.0, more preferably 2.0 to 9.0, and still more preferably 3.0 to 8.0. The flame retardancy is enhanced when the ratio thereof is 1.0 or more, and the moisture resistance, the film-forming properties, and the transparency of the coating film are enhanced when the ratio thereof is 10.0 or less.

### Solvent (iv)

The coating composition of the present invention may contain solvents other than the components (i) to (iii). The solvent is not particularly limited, but alcohols or water is preferable, and water is more preferable from the viewpoints of environmental conservation and availability.

When water is used as the solvent, specific examples thereof that can be used include fresh water such as tap water, industrial water, well water, natural water, rain water, distilled water, or ion exchange water. Among these, ion exchange water is particularly preferable. Ion exchange water can be produced using a pure water production apparatus (for example, product name "FW-10", manufactured by Organo Corporation, product name "Direct-QUV3", manufactured by Merck Millipore, or the like).

When the solvent is used, the amount thereof to be blended is preferably 20 to 98% by weight and more preferably 70 to 95% by weight with respect to the total amount of the composition. The fluidity and workability of the coating material are enhanced when the amount of the solvent is 20% by weight or more with respect to the total amount of the composition, and the concentration of active components in the coating material increases and thus the thickness of the coating film is likely to be increased when the amount thereof is 98% by weight or less with respect to the total amount of the composition.

### (v) Curing catalyst

The coating composition of the present invention may contain a curing catalyst for the purpose of promoting the curing reaction. As the type, the mixing amount, the addition method, and the like of the curing catalyst, known methods and conditions suitable for the type of the composition can be employed.

In particular, when the coating composition contains a component cured by a chemical reaction in the presence of a catalyst, the coating composition preferably contains a curing catalyst. Examples of the curing catalyst include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide, metal-containing compounds such as tetraisopropyl titanate, tetrabutyl titanate, titanium acetylacetonate, aluminum triisobutoxide, aluminum triisopropoxide, tris(acetylacetonate)aluminum, diisopropoxy(ethyl acetoacetate)aluminum, aluminum perchlorate, aluminum chloride, cobalt octylate, cobalt acetylacetonate, iron acetylacetonate, tin acetylacetonate, dibutyltin octylate, and dibutyltin laurate, and acidic compounds such as p-toluenesulfonic acid and trichloroacetic acid.

Among these, sodium propionate, sodium acetate, sodium formate, trimethylbenzylammonium hydroxide, tetramethylammonium hydroxide, tris(acetylacetonate)aluminum, and diisopropoxy(ethyl acetoacetate)aluminum are preferable, and metal-containing compounds such as aluminum-based catalysts, titanium-based catalysts, and tin-based catalysts each containing organic ligands are particularly preferable.

The coating composition of the present invention may contain additives that exhibit additional effects within a range where the effects of the present invention are not impaired. Examples of the additives include leveling agents. As the leveling agents, commonly known leveling agents such as acrylic, vinyl-based, silicone-based, and fluorine-based leveling agents can be used. Among these, from the viewpoint of increasing the flame retardancy of a coated article, silicone-based leveling agents having a siloxane structure in the main chain are preferable.

Further, examples of the other additives in addition to the leveling agents include ultraviolet absorbers, termiticides, antioxidants, dyes, and pigments. These additives may be used alone or in combination of two or more types thereof.

The total content of the components (i) to (iii) with respect to the total solid content in the coating composition of the present invention is preferably 70% by weight or more, more preferably 80% by weight or more, and most preferably 90% by weight or more.

The coating composition of the present invention can be produced by mixing the components (i) and (ii) described above, and optionally the components (iii), (iv), (v), and other components. A method of mixing the respective components may be appropriately selected from known methods without particular limitation. Examples of a device used for mixing include devices such as mixers, shakers, ultrasonic homogenizers, high-pressure homogenizers, bead mills, and ball mills.

Further, for the purpose of promoting dissolution and dispersion of each component, the components may be mixed after being heated within a range where the effects of the present invention are not impaired.

### [2] Cured product and coated article

A cured product (cured film) can be obtained by curing the coating composition of the present invention. For example, a flame-retardant coated article can be obtained by coating at least a portion of the surface of a wood-based material to be flame-retarded with the coating composition of the present invention directly or via one or more other layers and curing the composition to form a coating film (coating layer).

Further, after the surface of the wood-based material is coated with the coating composition of the present invention, a coating film may be formed only by drying without curing the composition by crosslinking of the organopolysiloxane of the component (i).

Further, the coating composition of the present invention can be suitably used as a coating composition for an undercoat layer, which is used for a wood-based material, and a flame-retardant coated article can be obtained by forming a topcoat layer composed of a coating film obtained by coating the surface of a wood-based material with a coating composition for a topcoat layer, which contains a flame retardant, drying the composition, and optionally curing the composition via an undercoat layer composed of a coating film obtained by coating the surface of the wood-based material with the coating composition of the present invention, drying the composition, and optionally curing the composition.

In this case, the coating layer including the undercoat layer and the topcoat layer described above may be formed on a portion of the surface of the base material or on the entire surface thereof. For example, in a case of a plate-shaped base material, the coating layer may be formed on at least one surface thereof.

### (1) Wood-based material

Examples of the wood-based material include wood materials such as lumber products, logs, plywood, laminated veneer lumber (LVL), laminated lumber, cross laminated timber (CLT), laminated strand lumber (LSL), laminated veneer board (LVB), laminated veneer sandwich (LVS), parallel strand lumber (PSL), medium-density fiberboard (MDF), structural panels (oriented strand board (OSB)), particleboard, and fiberboard.

In particular, members for construction, such as lumber, laminated lumber, and CLT type base materials, are suitable.

In addition, these wood-based materials and wood-based materials having treated surfaces, specifically, wood-based materials subjected to a chemical conversion treatment, a corona discharge treatment, a plasma treatment, and a treatment with an acid or alkali solution can also be used.

Further, the surface of the wood-based material on which other functional layers have been formed in advance may be coated with the coating composition of the present invention.

Examples of the other functional layers include a rust-preventive layer, a gas barrier layer, a waterproof layer, and a heat ray shielding layer, and any one or a plurality of layers thereof may be formed on the wood-based material in advance.

### (2) Undercoat layer

The undercoat layer can be formed by coating at least a portion of the surface of the wood-based material with the above-described coating composition of the present invention, drying the composition, and curing the composition as necessary.

The conditions for coating the wood-based material with the coating composition of the present invention and drying the composition may be appropriately set according to the type, the shape, and the like of the target wood-based material. The specific conditions can be appropriately selected from known conditions.

A method of coating the wood-based material with the coating composition may be appropriately selected from known methods, and examples thereof that can be used include various coating methods such as brush coating, spray coating, dipping, flow coating, roll coating, curtain coating, spin coating, and knife coating.

The coating composition of the present invention is a composition capable of forming a film at, for example, about 0 to 40°C and preferably about 5 to 35°C, and is more preferably a composition capable of forming a coating film after 24 hours at 25°C.

In addition, the coating composition may be heated in a temperature range where the base material and the like are not adversely affected, for the purpose of shortening the curing time.

### (3) Topcoat layer

The topcoat layer can be formed by coating the above-described undercoat layer with the coating composition for a topcoat layer, drying the composition, and curing the composition as necessary. The topcoat layer is preferably formed, for example, from the coating composition for a topcoat layer, which contains the following components (A) to (C) from the viewpoints of the moisture resistance, the flame retardancy, and the transparency of the coating film.
(A) an organopolysiloxane containing structural units in a ratio represented by the following formula (2)
(B) a flame retardant
(C) am inorganic filler

### Organopolysiloxane (A)

The component (A) is an organopolysiloxane containing structural units in a ratio represented by the following formula (2). Notably, in the formula (2), the unit represented by (R⁵₃SiO_{1/2}) is referred to as an M unit, the unit represented by (R⁶₂SiO) is referred to as a D unit, the unit represented by (R⁷SiO_{3/2}) is referred to as a T unit, and the unit represented by (SiO₂) is referred to as a Q unit, unless otherwise specified.

(R5³_{S}iO1_{/2)}f₍R6²_{S}iO)g₍R7¹_{S}iO3_{/2)}h₍SiO2₎i₍OR8⁾j (2)

In the formula (2), R⁵, R⁶, and R⁷ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups, where at least some of R⁵, R⁶, and R⁷ are a C₁-C₂₀ alkyl group substituted with amino groups, a C₆-C₂₀ aryl group substituted with amino groups, or a C₇-C₂₀ aralkyl group substituted with amino groups.

The C₁-C₂₀ alkyl group may be linear, branched, or cyclic, and specific examples thereof include a methyl group, an ethyl group, an n-propyl group, an isopropyl group, an n-butyl group, an isobutyl group, a sec-butyl group, a tert-butyl group, an n-pentyl group, an n-hexyl group, an n-octyl group, an n-decyl group, a cyclopentyl group, and a cyclohexyl group. Among these, from the viewpoint of increasing the flame retardancy of the coating composition, a methyl group or an ethyl group is preferable.

Examples of the C₆-C₂₀ aryl group include a phenyl group and a naphthyl group.

Examples of the C₇-C₂₀ aralkyl group include a benzyl group and a phenethyl group.

Examples of the heterocyclic group include a piperidinyl group, a pyridinyl group, a pyrrolyl group, and a thienyl group.

As described above, in the formula (2), at least some of R⁵, R⁶, and R⁷ are a C₁-C₂₀ alkyl group substituted with amino groups, a C₆-C₂₀ aryl group substituted with amino groups, or a C₇-C₂₀ aralkyl group substituted with amino groups. As such groups substituted with amino groups, a γ-aminopropyl group and a N-(2-aminoethyl)-3-aminopropyl group are preferable.

From the viewpoints of the solubility of the component (A) in water and the affinity of the component (A) for the flame retardant component and the base material, the total number of C₁-C₂₀ alkyl groups substituted with amino groups, C₆-C₂₀ aryl groups substituted with amino groups, or C₇-C₂₀ aralkyl groups substituted with amino groups in R⁵, R⁶, and R⁷ is preferably 50 mol% or more, more preferably 55 mol% or more, and still more preferably 60 mol% or more with respect to the total number of silicon atoms in the formula (2).

Further, among the groups represented by R⁵, R⁶, and R⁷, substituents other than the groups substituted with amino groups are preferably a methyl group or an ethyl group with a small number of carbon atoms in the flammable alkyl chain and more preferably a methyl group.

In the formula (2), R⁸ is each independently a hydrogen atom or a C₁-C₈ alkyl group.

Specific examples of the C₁-C₈ alkyl group include a methyl group, an ethyl group, an n-propyl group, an isopropyl group, an n-butyl group, an isobutyl group, a sec-butyl group, a tert-butyl group, an n-pentyl group, an n-hexyl group, and an n-octyl group.

Among these, from the viewpoint of the flame retardancy of the coating composition, R⁸ is preferably a hydrogen atom.

The subscript "f" is 0 to 0.5, the subscript "g" is 0 to 0.5, the subscript "h" is 0.2 to 1.0, the subscript "i" is 0 to 0.5, and f + g + h + i is 1.

The subscript "j" is a number of 0 to 3.0 and preferably a number of 0.1 to 2.0 from the viewpoint of the water solubility of the organopolysiloxane. When "j" is more than 3.0, the film-forming properties of the coating composition and the moisture resistance of the coating film may be deteriorated.

The organopolysiloxane of the component (A) has advantages in that network formation is facilitated and the component is likely to be immobilized onto the base material due to a certain degree of condensation that has been promoted and that the flame retardancy is less likely to be degraded because the organopolysiloxane contains fewer alkoxy groups serving as the sources of combustible gas than in a monomer (silane coupling agent or the like) component containing no siloxane bond (Si-O-Si bond).

The content of the monomer component containing no siloxane bond is preferably 50% by weight or less, more preferably 30% by weight or less, still more preferably 10% by weight or less, and even still more preferably 1% by weight or less with respect to the amount of the organopolysiloxane of the component (A).

The ratio between the monomer component containing no siloxane bond and the organopolysiloxane component can be determined from the signals and integration ratios in a ²⁹Si-NMR (nuclear magnetic resonance) spectrum.

The organopolysiloxane of the component (A) can be produced by hydrolytic condensation of monomer components of each constitutional unit in the presence of an acid or base catalyst.

Examples of monomers for the Q unit include tetramethoxysilane, tetraethoxysilane, tetra(n-propoxy)silane, tetra(i-propoxy)silane, tetra(n-butoxy)silane, alkali silicate, and active silicic acid obtained by cation exchange of alkali silicate.

Examples of monomers for the T unit include methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)-3-aminopropyltrimethoxysilane, N-(2-aminoethyl)-3-aminopropyltriethoxysilane, γ-isocyanatopropyltrimethoxysilane, and γ-isocyanatopropyltriethoxysilane.

Among these, from the viewpoints of the solubility of the siloxane to be obtained in water and the affinity for wood and the flame retardant component, γ-mercaptopropyltrimethoxysilane, γ-aminopropyltrimethoxysilane, γ-aminopropyltriethoxysilane, N-(2-aminoethyl)-3-aminopropyltrimethoxysilane, N-(2-aminoethyl)-3-aminopropyltriethoxysilane, γ-isocyanatopropyltrimethoxysilane, γ-isocyanatopropyltriethoxysilane, γ-glycidoxypropyltrimethoxysilane, γ-glycidoxypropyltriethoxysilane, and β-(3,4-epoxycyclohexyl)ethyltrimethoxysilane are preferable, and γ-aminopropyltrimethoxysilane, γ-aminopropyltriethoxysilane, N-(2-aminoethyl)-3-aminopropyltrimethoxysilane, and N-(2-aminoethyl)-3-aminopropyltriethoxysilane are more preferable.

Examples of monomers for the D unit include dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)-3-aminopropylmethyldimethoxysilane.

Among these, from the viewpoints of the solubility of the siloxane to be obtained in water and the affinity for wood and the flame retardant component, γ-aminopropylmethyldiethoxysilane and N-(2-aminoethyl)-3-aminopropylmethyldimethoxysilane are preferable.

Examples of monomers for the M unit include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, isopropyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, n-decyldimethylethoxysilane, trimethylsilanol, triethylsilanol, n-propyldimethylsilanol, n-propyldiethylsilanol, isopropyldimethylsilanol, isopropyldiethylsilanol, n-butyldimethylsilanol, n-hexyldimethylsilanol, n-pentyldimethylsilanol, n-decyldimethylsilanol, γ-aminopropyldimethylmethoxysilane, and N-(2-aminoethyl)-3-aminopropyldimethylmethoxysilane.

Among these, from the viewpoints of the solubility of the organopolysiloxane to be obtained in water and the affinity for the base material and the flame retardant component, γ-aminopropyldimethylmethoxysilane and N-(2-aminoethyl)-3-aminopropyldimethylmethoxysilane are preferable.

Since the M unit and the D unit have two or more Si-C bonds and are highly flammable, the contents of the M unit and the D unit are preferably 50 mol% or less, respectively, with respect to all the constitutional units in the organopolysiloxane of the component (A).

That is, in the formula (2), "f" is preferably a number of 0 to 0.5, more preferably a number of 0 to 0.2, and still more preferably 0 to 0.1.

Further, "g" is preferably a number of 0 to 0.5, more preferably a number of 0 to 0.2, and still more preferably 0 to 0.1.

Since the T unit has one Si-C bond and exhibits lower flammability than the D unit and the M unit, the flame retardancy is enhanced by setting the content of the T unit to 20 mol% or more with respect to all the constitutional units in the organopolysiloxane of the component (A).

That is, in the formula (2), "h" is preferably a number of 0.2 to 1.0, more preferably a number of 0.5 to 1.0, and still more preferably a number of 0.6 to 1.0.

The Q unit has no Si-C bonds and exhibits low flammability, and thus provides an effect of suppressing a decrease in flame retardancy due to combustion derived from Si-C bonds. Meanwhile, since the Q unit has a large number of cross-linking points and high reactivity, the content of the Q unit is preferably in a range of 0 to 50 mol% with respect to all the constitutional units in the organopolysiloxane of the component (A), that is, "i" is preferably a number of 0 to 0.5, more preferably a number of 0.1 to 0.4, and still more preferably a number of 0.3 to 0.4 from the viewpoints of the compatibility with the flame retardant component and the film-forming properties.

The ratio of each constitutional unit in the component (A) can be confirmed, for example, by a known method using chemical shifts and the ratio of integral values of ²⁹Si-NMR signals.

The content of the component (A) is preferably 5 to 60% by weight and more preferably 10 to 40% by weight with respect to the total amount of the coating composition for a topcoat layer. When the content of the component (A) is 5% by weight or more, the film-forming properties, the transparency, and the moisture resistance of the coating film are enhanced. Further, when the content thereof is 60% by weight or less, the flame retardancy of the coating film is further enhanced.

The component (A) may be used alone or in combination of two or more types thereof.

### (B) Flame retardant

The component (B) is one or more types of flame retardants selected from among a phosphorus-based compound, a boron-based compound, a magnesium-based compound, an aluminum-based compound, a nitrogen-based compound, an antimony-based compound, and a halogen-based compound.

Examples of the phosphorus-based compound include organophosphorus compounds, phosphoric acid, phosphoric acid esters, and phosphates, and specific examples thereof include diammonium hydrogen phosphate, ammonium dihydrogen phosphate, diguanidine phosphate, ammonium polyphosphate, hydrophobized ammonium polyphosphate, guanylurea phosphate, carbamate polyphosphate, and melamine phosphate.

Examples of the boron-based compound include organoboron compounds, boric acid, borax, boron oxide, boric acid esters, and borates.

Examples of the magnesium-based compound include magnesium hydroxide and magnesium oxide.

Examples of the aluminum-based compound include aluminum hydroxide.

Examples of the nitrogen-based compound include ammonium sulfate, ammonium carbonate, ammonium hydrogen carbonate, and melamine cyanurate.

Example of the antimony-based compound include antimony trioxide.

Examples of the halogen-based compound include zinc chloride.

Among these, phosphorus-based and boron-based compounds are preferable as the flame retardant used in the coating composition for a topcoat layer. In particular, a phosphate and a polyphosphate, which form a carbonized layer in a short time and easily ensure flame retardant performance are more preferably used.

In particular, from the viewpoint of further improving the flame retardancy and the moisture resistance of the coating film without impairing the transparency of the coating film, it is preferable to use a combination of water-soluble phosphates and/or polyphosphates with water-insoluble phosphates and/or polyphosphates.

The amount of the component (B) to be blended is preferably 50 to 300 parts by weight and particularly preferably 75 to 250 parts by weight with respect to 100 parts by weight of the organopolysiloxane of the component (A). The flame retardancy of the coating film may be insufficient when the amount thereof is less than 50 parts by weight, and the film-forming properties, the transparency, and the moisture resistance of the coating film may deteriorate when the amount thereof is more than 300 parts by weight.

The component (B) may be used alone or in combination of two or more types thereof.

### (C) Inorganic filler

As the inorganic filler of the component (C), commonly known inorganic fillers can be used, and examples thereof include inorganic fillers containing Group 13 elements, Group 14 elements (excluding carbon), first-series transition elements, second-series transition elements, third-series transition elements, lanthanoids, and the like.

Examples of the inorganic fillers containing Group 13 elements include oxides derived from aluminum, boron, indium, and the like. Among these, alumina is preferable.

Examples of the inorganic fillers containing Group 14 elements (excluding carbon) include oxides derived from silicon, tin, and the like, and salts thereof. Among these, silica is preferable.

Examples of the inorganic fillers containing first-series transition elements include oxides derived from titanium, manganese, zinc, and the like, and these oxides can also be used as light-absorbing materials for specific wavelengths.

Examples of the inorganic fillers containing second-series transition elements include oxides derived from yttrium, zirconium, and the like, and these oxides can also be used as light-absorbing and fluorescent materials for specific wavelengths.

Examples of the inorganic fillers containing third-series transition elements include oxides derived from hafnium, tantalum, and the like.

Examples of the inorganic fillers containing lanthanoid include oxides derived from lanthanum, cerium, praseodymium, neodymium, terbium, dysprosium, ytterbium, and the like, and these oxides can also be used as light absorbing and fluorescent materials for specific wavelengths.

Further, composites formed by combining two or more of these via chemical bonds can be used.

The shape of the inorganic filler is not particularly limited, and inorganic fillers in various shapes such as a spherical shape, a hollow spherical shape, a porous shape, a plate shape, a needle shape, and a fibrous shape can be used. Among these, a fibrous inorganic filler is preferable from the viewpoint of increasing the effect of suppressing cracks in a ceramic layer to be formed after combustion and enhancing particularly the flame retardancy.

In particular, the inorganic filler used in the coating composition for a topcoat layer is preferably an inorganic oxide or silicate containing elements such as silicon, boron, and aluminum, which undergoes ceramization upon combustion to form a fire-resistant layer or a heat insulating layer, and particularly preferably a combination of a silicon oxide-containing filler such as silica or glass fibers and a phyllosilicate such as clay from the viewpoint of further enhancing the flame retardancy.

The amount of the component (C) to be blended is preferably 25 to 150 parts by weight and particularly preferably 50 to 150 parts by weight with respect to 100 parts by weight of the organopolysiloxane of the component (A). The flame retardancy of the coating film may be insufficient when the amount thereof is less than 25 parts by weight, and the film-forming properties and the transparency of the coating film may deteriorate when the amount thereof is more than 150 parts by weight.

The component (C) may be used alone or in combination of two or more types thereof.

A weight ratio [(B) + (C)]/(A) of the total weight of the component (B) and the component (C) to the weight of the component (A) in the coating composition for a topcoat layer is preferably 1.0 to 4.5, more preferably 1.2 to 4.0, and still more preferably 1.5 to 2.5. The flame retardancy is enhanced when the ratio thereof is 1.0 or more, and the moisture resistance, the film-forming properties, and the transparency of the coating film are enhanced when the ratio thereof is 4.5 or less.

### (D) Leveling agent

The coating composition for a topcoat layer may contain a component derived from a leveling agent (D).

As the leveling agent, commonly known leveling agents such as acrylic, vinyl-based, silicone-based, and fluorine-based leveling agents can be used. Among these, from the viewpoint of increasing the flame retardancy of the coating composition, silicone-based leveling agents having a siloxane structure in the main chain are preferable.

When the component (D) is used, the amount thereof to be blended is preferably 1 to 10 parts by weight and more preferably 3 to 6 parts by weight with respect to 100 parts by weight of the organopolysiloxane of the component (A). When the amount thereof is in the above-described ranges, a topcoat layer with excellent film-forming properties can be obtained while maintaining the flame retardancy and the transparency.

The component (D) may be used alone or in combination of two or more types thereof.

### (E) Solvent

The coating composition for a topcoat layer may contain solvents other than the components described above.

The solvent is not particularly limited, but alcohols or water is preferable, and water is more preferable from the viewpoints of environmental conservation and availability.

When water is used as the solvent, specific examples thereof that can be used include fresh water such as tap water, industrial water, well water, natural water, rain water, distilled water, or ion exchange water. Among these, ion exchange water is particularly preferable. Ion exchange water can be produced using a pure water production apparatus (for example, product name "FW-10", manufactured by Organo Corporation, product name "Direct-QUV3", manufactured by Merck Millipore, or the like).

When the solvent is used, the amount thereof to be blended is preferably 20 to 80% by weight and more preferably 30 to 60% by weight with respect to the total amount of the coating composition for a topcoat layer. The fluidity and workability of the coating material are enhanced when the amount of the solvent is 20% by weight or more with respect to the total amount of the composition, and the concentration of active components in the coating material increases and thus the thickness of the coating film is likely to be increased when the amount thereof is 80% by weight or less with respect to the total amount of the composition.

The coating composition for a topcoat layer may contain a curing catalyst for the purpose of promoting the curing reaction. As the type, the mixing amount, the addition method, and the like of the curing catalyst, known methods and conditions suitable for the type of the composition can be employed. Specifically, those described as the component (v) above can be used.

The coating composition for a topcoat layer may contain additives that exhibit additional effects within a range where the effects of the present invention are not impaired.

Examples of the additives include ultraviolet absorbers, termiticides, antioxidants, dyes, and pigments. These additives may be used alone or in combination of two or more types thereof.

The total content of the components (A) to (C) with respect to the total solid content in the coating composition for a topcoat layer is preferably 70% by weight or more, more preferably 80% by weight or more, and most preferably 90% by weight or more.

The coating composition for a topcoat layer can be produced by mixing the components (A) to (C) described above, optionally the components (D) and (E), and other components. A method of mixing the respective components may be appropriately selected from known methods without particular limitation. Examples of a device used for mixing include devices such as mixers, shakers, ultrasonic homogenizers, high-pressure homogenizers, bead mills, and ball mills.

Further, for the purpose of promoting dissolution and dispersion of each component, the components may be mixed after being heated within a range where the effects of the present invention are not impaired.

The conditions for coating the undercoat layer with the coating composition for a topcoat layer and drying the composition to form a topcoat layer may be appropriately set according to the type, the shape, and the like of the target wood-based material. The specific conditions can be appropriately selected from known conditions.

The coating method may be appropriately selected from known methods, and examples thereof that can be used include various coating methods such as brush coating, spray coating, dipping, flow coating, roll coating, curtain coating, spin coating, and knife coating.

The coating composition for a topcoat layer is a composition capable of forming a film at, for example, about 0 to 40°C and preferably about 5 to 35°C, and is more preferably a composition capable of forming a coating film after 24 hours at 25°C.

In addition, the coating composition may be heated in a temperature range where the base material and the like are not adversely affected, for the purpose of shortening the curing time.

The coating amounts of the undercoat layer and the topcoat layer are not particularly limited, but the base material is coated with the undercoat layer such that the coating amount thereof is preferably 0.01 to 0.50 kg/m² and more preferably 0.01 to 0.10 kg/m². When the coating amount thereof is in the above-described ranges, the flame retardancy is enhanced, and the effect of suppressing appearance defects around knots is further enhanced.

The base material is coated with the topcoat layer such that the coating amount thereof is preferably 0.1 to 2.0 kg/m² and more preferably 0.2 to 1.0 kg/m². When the coating amount thereof is in the above-described ranges, the flame retardancy and the appearance of the coating film are enhanced. Further, in order to set the coating amount of the coating film to be in the above-described ranges, the base material may be coated with the coating composition such that the coating amount of the solid content of the coating composition is in the above-described ranges.

In the coated article according to the present invention, a surface on which the topcoat layer is formed or an opposite surface thereof may be coated with one or a plurality of layers selected from among a hard coat layer, an anticorrosive layer, a gas barrier layer, a waterproof layer, a heat ray shielding layer, an antifouling layer, a photocatalytic layer, an antistatic layer, and the like. Examples of the material constituting these layers include an alkyd resin, an acrylic resin, a urethane resin, an acrylic-silicon resin, a fluororesin, a silicone resin, an epoxy resin, a vinylidene chloride copolymer resin, and a vinyl chloride-based resin (which may be aqueous or solvent-based). The above-described layer can be applied as a coating liquid or laminated by being bonded as a film formed in advance via an adhesive or the like.

### EXAMPLES

Hereinafter, the present invention will be described in more detail with reference to Synthesis Examples, Comparative Synthesis Examples, Examples, and Comparative Examples, but the present invention is not limited to these Examples.

### [1] Preparation of coating composition for undercoat layer

### [Examples 1 to 8 and Comparative Examples 1 to 6]

The following components were mixed in the blending amounts listed in Tables 1 and 2 to prepare coating compositions for an undercoat layer. Further, the concentration of active components listed in Tables 1 and 2 denotes the sum of the solid contents in the blending amounts of a component (i), a comparative component, a component (ii-1), a component (ii-2), a component (ii-3), and a component (iii-1), the blending amount of a component (ii-4), and the blending amount of a component (iii-2) with respect to 100 parts by weight of the coating composition. Further, the weight ratio between active components listed in Tables 1 and 2 is a value calculated by converting the weight ratio of each component in terms of solid content with respect to 100 parts by weight of the component (i).

### Component (i)

(i-1): 30 wt% aqueous solution of hydroxy group-containing organopolysiloxane (in the formula (1), a = 0, b = 0, c = 1.0, d = 0, e = 0.7, R³ = methyl group or group represented by formula (3), R⁴ = hydrogen atom, amount of hydroxy group substitution (with respect to total silicon atoms) = 200 mol%) 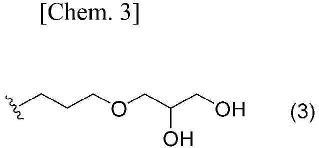 (In the formula, the wavy line represents a bonding site.)

### [Comparative component]

### (i'-2): aqueous dispersion liquid of acrylic resin produced in Comparative Synthesis Example 1

### [Comparative Synthesis Example 1]

200 parts by weight of ion exchange water and 6.0 parts by weight of a non-reactive emulsifier (HITENOL NF-0825: anionic, manufactured by DKS Co., Ltd.) were added to a five-necked flask provided with a stirrer, a reflux condenser, a thermometer, a dropping device, and a nitrogen inlet tube, the temperature was increased to 80°C while the inside of the flask was purged with nitrogen, 1.0 parts by weight of potassium persulfate was added thereto, and a mixture of 190 parts by weight of methyl methacrylate, 250 parts by weight of butyl acrylate, 10 parts by weight of acrylic acid, 220 parts by weight of ion exchange water, and 30.0 parts by weight of the non-reactive emulsifier, which had been stirred and mixed in a separate container in advance, was continuously added dropwise thereto over 3.5 hours. Thereafter, the mixture was aged at 80°C for 2 hours while being stirred, a mixture of 2.7 parts by weight of ion exchange water and 0.3 parts by weight of a 70 wt% aqueous solution of tert-butyl hydroperoxide was added to the reactor, and a mixture of 9.7 parts by weight of ion exchange water and 0.3 parts by weight of sodium erythorbate was continuously added dropwise thereto over 5 minutes. Thereafter, the mixture was aged at 80°C for 2 hours while being stirred, and cooled to room temperature, 4.0 parts by weight of a 25 wt% ammonia aqueous solution was added thereto to adjust the pH thereof to 9.0, thereby obtaining an aqueous dispersion liquid i'-2 of an acrylic resin. The content of the acrylic resin in the dispersion liquid was 49.8% by weight, and the volume average particle diameter of the emulsion was 144 nm.

### Component (ii)

ii-1: SNOWTEX OL (20 wt% silica aqueous dispersion liquid, particle diameter: 45 nm, manufactured by Nissan Chemical Corporation)
ii-2: SNOWTEX O40 (40 wt% silica aqueous dispersion liquid, particle diameter: 22 nm, manufactured by Nissan Chemical Corporation)
ii-3: ALUMINASOL 520-A (20 wt% alumina aqueous dispersion liquid, manufactured by Nissan Chemical Corporation)
ii-4: BENTONE-EW NA (hectorite clay, manufactured by Elementis Specialties, Inc.)

### Component (iii)

iii-1: NONNEN W2-50 (50 wt% aqueous solution of phosphorus-nitrogen-based flame retardant, manufactured by Maruzen Yuka Kogyo Co., Ltd.)
iii-2: Boric acid (manufactured by Fujifilm Wako Pure Chemical Corporation)

### [Evaluation of coating stability]

The stability of the coating composition for undercoating was visually evaluated according to the following criteria. In regard to the sedimentation over time of water-insoluble flame retardant components or filler components, which are originally solid, as long as the composition is usable without problems upon shaking, such a state is not determined as deterioration in coating stability. The results thereof are collectively listed in Tables 1 and 2.
∘: Gelation or solid precipitation does not occur upon blending each component, and the liquid state is maintained.
×: Gelation or solid precipitation occurs upon blending each component.

### [2] Preparation of coating composition for topcoat layer

### [Synthesis Example 1]

56.0 g of a 30 wt% aqueous solution of an amino group-containing organopolysiloxane (A-1, in the formula (2), f = 0, g = 0, h = 0.7, i = 0.3, j = 0.7, R⁷ = methyl group or N-(2-aminoethyl)-3-aminopropyl group, R⁸ = hydrogen atom, amount of amine substitution (with respect to total silicon atoms) = 61 mol%), 16.7 g of NONNEN W2-50 (B-1, 50 wt% aqueous solution of phosphorus-nitrogen-based flame retardant, manufactured by Maruzen Yuka Kogyo Co., Ltd.), 13.6 g of TAIEN K (B-2, water-insoluble ammonium polyphosphate powder, manufactured by Taihei Chemical Industrial Co., Ltd.), 12.7 g of EPH80M-01N (C-1, glass fiber, manufactured by Nippon Electric Glass Co., Ltd.), and 0.9 g of BYK3450 (leveling agent, polyether-modified polydimethylsiloxane, manufactured by BYK-Chemie Japan KK) were mixed to prepare an aqueous coating composition. The solid content ratio of the component (B) in the solution was 131 parts by weight, and the solid content ratio of the component (C) in the solution was 76 parts by weight with respect to 100 parts by weight of the component (A).

### [3] Preparation of coated wood and evaluation thereof

A cedar wood material containing knots (air-dry specific gravity: 0.27 to 0.49), which had been dried at 115°C for 24 hours and cut into a size of 300 mm × 300 mm × 20 mm, was coated with each of the undercoat coating materials of Examples 1 to 8 and Comparative Examples 2 to 6 such that the coating amount of the solid content was about 0.01 to 0.02 kg/m², and the coating material was dried for 2 hours. Next, the wood material was coated with the topcoat coating material obtained in Synthesis Example 1 such that the coating amount of the solid content was about 0.38 kg/m², and cured at a temperature of 21 to 25°C and a relative humidity of 45 to 55% RH until the weight reached a constant value. Further, in Comparative Example 1, the wood material was coated with the topcoat coating material obtained in Synthesis Example 1 such that the coating amount of the solid content was about 0.38 kg/m² without being coated with the undercoat coating material, and then cured at a temperature of 21 to 25°C and a relative humidity of 45 to 55% RH until the weight reached a constant value.

The prepared coated cedar material (coated wood) was subjected to each of the following tests.

### (1) Appearance of coating film

The appearance of the coating film around knots of the cedar wood material was visually evaluated according to the following criteria. The results thereof are collectively listed in Table 1.
∘: The coating film around knots is transparent, and the wood grain can be visually observed.
×: White turbidity occurs in the coating film around knots.

### (2) Moisture resistance

Each piece of wood was subjected to 5 cycles of a wet-dry repeating operation, one cycle consisting of an operation carried out at 40°C and 90% RH (24 hours) followed by air-drying at 60°C (24 hours), and naturally cooled at 20°C and 60% RH for 24 hours, and the surface state of the coating film was observed and visually evaluated according to the following criteria. The results thereof are collectively listed in Table 1.
∘: Whitening, deliquescence, discoloration, or the like is not found.
×: Whitening, deliquescence, discoloration, or the like is found.

### (3) Flame retardancy

Each piece of wood was subjected to a cone calorimeter test (ISO-5660-1) at a radiant heat intensity of 50 kW/m², and the flame retardancy was evaluated according to the following criteria.
⊚: The heat release after heating for 10 minutes is 6 (MJ/m²) or less.
∘: The heat release after heating for 10 minutes is 8 (MJ/m²) or less.
×: The heat release after heating for 10 minutes is more than 8 (MJ/m²) and/or the coating film expands and comes into contact with the device (igniter).

**[Table 1]**

| | | Example | | | | | | | |
|---|---|---|---|---|---|---|---|---|---|
| | | 1 | 2 | 3 | 4 | 5 | 6 | 7 | 8 |
| Blending amount (parts by weight) | i-1 | 100 | 100 | 100 | 100 | 100 | 100 | 100 | 100 |
| | ii-1 | 150 | 300 | 1350 | - | - | 600 | 600 | 300 |
| | ii-2 | - | - | - | 600 | - | - | - | - |
| | ii-3 | - | - | - | - | 1200 | - | - | - |
| | ii-4 | - | - | - | - | - | - | - | 60 |
| | iii-1 | - | - | - | - | - | 48 | 48 | 48 |
| | iii-2 | - | - | - | - | - | - | 24 | 24 |
| Weight ratio | Component (i) | 100 | 100 | 100 | 100 | 100 | 100 | 100 | 100 |
| | Component (ii) | 100 | 200 | 900 | 800 | 800 | 400 | 400 | 400 |
| | Component (iii) | 0 | 0 | 0 | 0 | 0 | 80 | 160 | 160 |
| | [(ii)+(iii)]/(i) | 1.0 | 2.0 | 9.0 | 8.0 | 8.0 | 4.8 | 5.6 | 5.6 |
| Concentration of active components (% by weight) | | 24 | 23 | 21 | 39 | 21 | 23 | 26 | 37 |
| Evaluation results | Stability of coating composition for undercoat layer | ○ | ○ | ○ | ○ | ○ | ○ | ○ | ○ |
| | Appearance of coating film | ○ | ○ | ○ | ○ | ○ | ○ | ○ | ○ |
| | Moisture resistance | ○ | ○ | ○ | ○ | ○ | ○ | ○ | ○ |
| | Flame retardancy | ⊚ | ○ | ○ | ⊚ | ○ | ⊚ | ⊚ | ⊚ |
| | | 4.4 MJ/m² | 7.4 MJ/m² | 7.4 MJ/m² | 4.2 MJ/m² | 7.0 MJ/m² | 4.1 MJ/m² | 5.8 MJ/m² | 3.8 MJ/m² |

**[Table 2]**

| | | Comparative Example | | | | | |
|---|---|---|---|---|---|---|---|
| | | 1 | 2 | 3 | 4 | 5 | 6 |
| Blending amount (parts by weight) | i-1 | - | 100 | 100 | 100 | - | - |
| | i'-2 | - | - | - | - | 100 | 100 |
| | ii-1 | - | 100 | 100 | 1650 | - | 500 |
| | iii-1 | - | - | 48 | - | - | 48 |
| | iii-2 | - | - | 24 | - | - | 24 |
| Weight ratio | Component (i) | 0 | 100 | 100 | 100 | 0 | 0 |
| | Comparative component | 0 | 0 | 0 | 0 | 100 | 100 |
| | Component (ii) | 0 | 67 | 67 | 1100 | 0 | 200 |
| | Component (iii) | 0 | 0 | 160 | 0 | 0 | 96 |
| | [(ii)+(iii)]/(i) | - | 0.7 | 2.3 | 11.0 | - | - |
| Concentration of active components (% by weight) | | - | 25 | 36 | 21 | 50 | 29 |
| Evaluation results | Stability of coating composition for undercoat layer | - | ○ | ○ | ○ | ○ | ○ |
| | Appearance of coating film | × | × | ○ | × | ○ | × |
| | Moisture resistance | ○ | ○ | ○ | ○ | ○ | ○ |
| | Flame retardancy | ⊚ | × | × | × | ×* | ×* |
| | | 5.7 MJ/m² | 8.3 MJ/m² | 10.8 MJ/m² | 9.3 MJ/m² | 10.3 MJ/m² | 11.8 MJ/m² |

| | | | | | | | |
|---|---|---|---|---|---|---|---|
| * expanded coating film comes into contact with device | | | | | | | |

As listed in Table 1, it was found that the coated articles of Examples 1 to 8, which had an undercoat layer composed of a coating film of a coating composition satisfying the requirements of the present invention and a topcoat layer containing a siloxane compound, a flame retardant, and an inorganic filler, exhibited a satisfactory appearance of the coating film and satisfactory moisture resistance, suppressed whitening around the knots, had a small heat release during combustion, and exhibited flame retardancy satisfying the standards for quasi-non-combustible wood.

As described above, it was considered that when an undercoat layer composed of a coating film of the coating composition satisfying the requirements of the present invention was provided, gaps between wood fibers were filled, the penetration of the topcoat coating material into the wood was suppressed, which enabled the formation of a uniform topcoat layer so that whitening was suppressed and enabled the formation of a robust ceramic layer during combustion, and thus the fire-resistant and heat insulating effects thereof greatly improved the flame retardancy of wood.

Meanwhile, as listed in Table 2, in Comparative Example 1 in which an undercoat layer was not provided, whitening occurred around the knots. In Comparative Examples 2 and 3 in which the amount of inorganic filler added was insufficient, the flame retardancy was poor. Further, in Comparative Example 4 in which the amount of inorganic filler added was excessive, the film formation of the undercoat layer was not sufficiently carried out. Therefore, the flame retardancy was poor, and whitening occurred around the knots.

Further, in Comparative Examples 5 and 6 in which an undercoat layer having no siloxane structure was provided, an increase in flammable organic components led to intense combustion, which resulted in deterioration of the flame retardancy and occurrence of expansion of the coating film.

## Claims

1. A coating composition comprising:
(i) 100 parts by weight of an organopolysiloxane comprising structural units in a ratio represented by the following formula (1)
(R1³_{S}iO1_{/2)}a₍R2²_{S}iO)b₍R3¹_{S}iO3_{/2)}c₍SiO2₎d₍OR4⁾e (1)
wherein R¹, R², and R³ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups and may contain an ether bond, where at least some of R¹, R², and R³ are a C₁-C₂₀ alkyl group which may be substituted with hydroxy groups and may contain an ether bond, a C₆-C₂₀ aryl group which may be substituted with hydroxy groups and may contain an ether bond, or a C₇-C₂₀ aralkyl group which may be substituted with hydroxy groups and may contain an ether bond, and R⁴ is each independently a hydrogen atom or a C₁-C₈ alkyl group, a is 0 to 0.5, b is 0 to 0.5, c is 0.2 to 1.0, d is 0 to 0.5, e is 0 to 3.0, and a + b + c + d is 1, and
(ii) 100 to 900 parts by weight of an inorganic filler.

2. The coating composition according to claim 1, wherein a total number of hydroxy groups contained in R¹, R², and R³ is 50 mol% or more with respect to a total number of silicon atoms in the formula (1).

3. The coating composition according to claim 1 or 2, wherein the inorganic filler (ii) contains one or more types selected from among silica, alumina, and a phyllosilicate.

4. The coating composition according to any one of claims 1 to 3, further comprising:
10 to 300 parts by weight of one or more types of flame retardants (iii) selected from among a phosphorus-based compound, a boron-based compound, a magnesium-based compound, an aluminum-based compound, a nitrogen-based compound, an antimony-based compound, and a halogen-based compound with respect to 100 parts by weight of the component (i).

5. The coating composition according to claim 4, wherein a weight ratio [(ii)+(iii)]/(i) of a total weight of the component (ii) and the component (iii) to a weight of the component (i) is 2.0 to 9.0.

6. A cured product of the coating composition according to any one of claims 1 to 5.

7. A coated article comprising a coating layer composed of a coating film formed from the coating composition according to any one of claims 1 to 5, provided on at least a portion of a surface of a wood-based material directly or via one or more types of other layers.

8. A coated article comprising:
a topcoat layer composed of a coating film formed from a topcoat coating composition containing the following component (A), component (B), and component (C), provided on at least a portion of a surface of a wood-based material via an undercoat layer composed of a coating film formed from the coating composition according to any one of claims 1 to 5,
(A) 100 parts by weight of an organopolysiloxane comprising structural units in a ratio represented by the following formula (2)
(R5³_{S}iO1_{/2)}f₍R6²_{S}iO)g₍R7¹_{S}iO3_{/2)}h₍SiO2₎i₍OR8⁾j (2)
wherein R⁵, R⁶, and R⁷ are each independently a hydrogen atom, or a C₁-C₂₀ alkyl group, a C₆-C₂₀ aryl group, or a C₇-C₂₀ aralkyl group, each of which may be substituted with one or more amino groups, hydroxy groups, epoxy groups, acid anhydride groups, maleimide groups, vinyl groups, allyl groups, acrylic groups, methacrylic groups, or heterocyclic groups, where at least some of R⁵, R⁶, and R⁷ are a C₁-C₂₀ alkyl group substituted with amino groups, a C₆-C₂₀ aryl group substituted with amino groups, or a C₇-C₂₀ aralkyl group substituted with amino groups, and R⁸ is each independently a hydrogen atom or a C₁-C₈ alkyl group, f is 0 to 0.5, g is 0 to 0.5, h is 0.2 to 1.0, i is 0 to 0.5, j is 0 to 3.0, and f + g + h + i is 1,
(B) 50 to 300 parts by weight of one or more types of flame retardants selected from among a phosphorus-based compound, a boron-based compound, a magnesium-based compound, an aluminum-based compound, a nitrogen-based compound, an antimony-based compound, and a halogen-based compound; and
(C) 25 to 150 parts by weight of an inorganic filler.

9. The coated article according to claim 8, wherein a coating amount of the undercoat layer is 0.01 to 0.50 kg/m² with respect to the wood-based material, and a coating amount of the topcoat layer is 0.1 to 2.0 kg/m² with respect to the wood-based material.
